# EUROPEAN PATENT APPLICATION

(11) **EP 0 747 909 A1**
(43) Date of publication of application: **11.12.1996**
(21) Application number: 96304290.8
(22) Date of filing: 07.06.1996
(51) Int. Cl.: H01B 1/24, H01B 1/20

(54) **Semiconductive polymeric composite material**

(30) Priority: 07.06.1995 JP 164691/95
(71) Applicant: KUREHA KAGAKU KOGYO KABUSHIKI KAISHA, Chuo-ku Tokyo 103 (JP)
(72) Inventor: Kitamura, Hideki, Polymeric Processing, Techn. Ctr, Tamari-mura, Niihari-gun, Ibaraki-ken (JP); Teramoto, Yoshikichi Polymeric Proc., Techn. Ctr, Tamari-mura, Niihari-gun, Ibaraki-ken (JP); Matsunaga, Satoru Polymeric Processing, Techn. Ctr, Tamari-mura, Niihari-gun, Ibaraki-ken (JP)
(74) Representative: Jones, Helen Marjorie Meredith

(57) **Abstract**

The invention provides a semiconductive polymeric composite material including a matrix composed of a polymeric material, and conductive substances dispersed therein. In the composite material, (1) flat graphite (A) in which a diameter of a circle having an area equal to an average area of a flat surface of the flat graphite is 2.0-20.0 µm, and a conductive filler (B) the average particle diameter of which is at least 1.0 µm but smaller than the diameter of the circle having the area equal to the average area of the flat surface of the flat graphite are contained as the conductive substances, (2) the percentage by volume of the sum in volume of the flat graphite (A) and the conductive filler (B) in the semiconductive polymeric composite material is 7.0-20.0%, (3) the volume ratio (A:B) of the flat graphite (A) to the conductive filler (B) is 1:2 to 3:1, and (4) the volume resistivity of the semiconductive polymeric composite material is 10⁶-10¹² Ωcm. The semiconductive polymeric composite material is uniform in distribution of the volume resistivity.

## Description

### FIELD OF THE INVENTION

The present invention relates to a semiconductive polymeric composite material, and more particularly to a semiconductive polymeric composite material which has a volume resistivity of 10⁶-10¹² Ωcm and is uniform in distribution of the volume resistivity. The semiconductive polymeric composite material according to the present invention is suitable for use in a charging roller, a developing roller, a transfer roller, a transfer belt, a toner layer forming blade, a cleaning blade and/or the like in an image-forming apparatus such as an electrophotographic copying machine.

In the present specification the term "semiconductive" is used in the sense of having a conductivity between that of metals and that of electrical insulators.

### BACKGROUND OF THE INVENTION

In an image-forming apparatus such as an electrophotographic copying machine, an image is generally formed through (1) a charging step in which a photosensitive drum is charged equally and uniformly, (2) an exposing step in which an electrostatic latent image is formed on the photosensitive drum by exposure, (3) a developing step in which the electrostatic latent image is developed into a visible image with a developer (toner), (4) a transferring step in which the toner on the photosensitive drum is transferred to a transfer material (for example, transfer paper), (5) a fixing step in which the toner on the transfer material is fixed, and (6) a cleaning step in which the toner remaining on the photosensitive drum after the transferring step is cleaned.

Functional parts of such an image-forming apparatus, for example, a charging roller, a transfer roller or belt, a developing roller, a toner layer forming blade and a cleaning blade, are required to be semiconductive, and specifically to have a volume resistivity of about 10⁶-10¹² Ωcm. More specifically, for example, in a charging system making use of the charging roller, voltage is applied to the charging roller, and the charging roller is then brought into contact with a photosensitive drum, whereby an electric charge is directly applied to the photosensitive drum to equally and uniformly charge the photosensitive drum. In a development system making use of the developing roller, a toner is applied in a charged state to a peripheral surface of the developing roller by frictional force between the developing roller and a toner supply roller, and this toner is uniformly leveled by a toner layer forming blade, whereby the toner is caused to fly toward an electrostatic latent image on the photosensitive drum by electric attraction force to develop the latent image. In a transferring system making use of the transfer roller, voltage having a polarity opposite to that of the toner is applied to the transfer roller to generate an electric field, whereby the toner is transferred to a transfer material by the electrostatic force of the electric field.

Accordingly, these charging roller, developing roller, transfer roller and toner layer forming blade are required to be so semiconductive as to have a volume resistivity within a proper range. The volume resistivity itself is also required to be uniform in distribution. If the volume resistivity varies according to position, and its distribution is uneven, such disadvantages that no high-quality image can be provided are encountered. For example, if the volume resistivity distribution of the charging roller is uneven, it is difficult to equally and uniformly charge the photosensitive drum, so that the quality of the resulting image is deteriorated.

Semiconductive polymeric composite materials obtained by dispersing a conductive filler such as carbon black, graphite, metal powder or metal oxide powder in a polymeric material such as a resin or elastomer have heretofore been used in application fields of charging rollers and the like. For example, a charging roller is formed by providing a coating layer composed of such a semiconductive polymeric composite material on a core bar.

However, a polymeric composite material obtained by dispersing a high-conductive filler such as carbon black, graphite or metal powder in a polymeric material to have it have a volume resistivity of about 10⁶-10¹² Ωcm, preferably about 10⁷-10¹⁰ Ωcm generally has an extremely uneven distribution in the volume resistivity. A scatter of the distribution amounts to several figures. Therefore, such a polymeric composite material has involved a problem from the viewpoint of practical performance. Besides, a composite material obtained by dispersing conductive fine particles such as carbon black in a resin small in surface energy, such as a fluorocarbon resin has involved a problem that the conductive fine particles are moved in the resin by the application of high voltage or the like, so that its volume resistivity value varies, and the distribution thereof becomes uneven. Further, the charged amount of the conductive filler must be generally increased in order to attain the required level of semiconductivity. For that reason, the forming or molding ability and mechanical strength of the resulting polymeric composite material are lowered, or its hardness becomes too high.

There has hitherto been proposed an antistatic resin composition applicable to injection molding, in which small particle size conductive carbon black, natural flake graphite and an inorganic filler are incorporated into polyamide-imide or polyether-imide (Japanese Patent Application Laid-Open No. 246959/1987). However, the conductive carbon black has a drawback that its fine structure is destroyed under shearing force upon processing, and so the volume resistivity tends to vary. Such a tendency is known to be marked in kneading and extruding processes in particular. In addition, the use of the conductive carbon black also causes a problem that a work environment is polluted by dusting.

There has been proposed a semiconductive polymeric material composition in which powder of a good-conductive material such as carbon powder, graphite powder, titanium carbide powder or metal powder, and a finely divided semiconductive material higher in volume resistivity than the good-conductive material, such as potassium titanate whisker, conductivity-imparted ZnO or surface-treated antimony trioxide are incorporated into an insulating polymeric molding material (Japanese Patent Application Laid-Open No. 268759/1989). In order to attain a volume resistivity within a range in which this composition becomes the desired semiconductivity, however, the total charged amount of the good-conductive material powder and the finely divided semiconductive material must be increased to an extent as great as 130-210 parts by weight (Examples 1-3) per 100 parts by weight of, for example, a phenol resin. Therefore, the mechanical strength of the resulting compositions becomes insufficient. For that reason, a fibrous reinforcing material such as glass fibers is incorporated into the composition to supplement the lowering of mechanical strength. However, nobody can gainsay that such a composition becomes complicated in processing as compared with those containing no fibers. Further, even if the composition is provided as a fiber-reinforced composite material, its mechanical strength may not be always made sufficiently high in some cases.

There has been proposed a semiconductive resin composite material in which particles having a great particle diameter and a high resistance, such as potassium titanate, as a principal conductive filler and particles having a small diameter and a low resistance, such as carbon black, as an auxiliary conductive filler are dispersed in a binding resin (Japanese Patent Application Laid-Open No. 133077/1992). This composite material is improved in the uniformity of volume resistivity. In order to attain the desired volume resistivity, however, the principal conductive filler and auxiliary conductive filler must be incorporated in amounts as great as 50-85 parts by weight and 12-25 parts by weight, respectively, per 100 parts by weight of the binding resin. It is hence impossible to satisfy both forming or molding ability and mechanical strength.

There has been proposed a conductive plastic composition in which substantially spherical powder of a conductive metal oxide doped with a metal of a different kind, or of a metal oxide coated with the conductive metal oxide, and conductive powder coated with a flat conductive metal oxide doped with a metal of a different kind are blended into a thermoplastic in a proportion of 30-60 wt.% based on the whole composition (Japanese Patent Application Laid-Open No. 116502/1994). However, this composition also requires to increase the charged amount of the conductive powders in order to attain the volume resistivity on a level required, so that the forming or molding ability and mechanical strength of the composition are lowered.

### OBJECTS AND SUMMARY OF THE INVENTION

It is an object of the present invention to provide a semiconductive polymeric composite material in which the volume resistivity is 10⁶-10¹² Ωcm, and the distribution thereof is uniform and narrow in scatter.

Another object of the present invention is to provide a semiconductive polymeric composite material which can attain semiconductivity on a level required even when the charged amount of a conductive substance is relatively small, has a substantially uniform volume resistivity and scarcely undergoes dusting of the conductive substance in its production process.

The present inventors have carried out an extensive investigation with a view toward overcoming the above-described problems involved in the prior art. As a result, it has been found that when specific flat graphite and a specific conductive filler are dispersed in a matrix of a polymeric material (polymer) in combination in a specified volume ratio, the above objects can be achieved. The present invention has been led to completion on the basis of this finding.

According to the present invention, there is thus provided a semiconductive polymeric composite material comprising a matrix composed of a polymeric material, and conductive substances dispersed therein, wherein
(1) flat graphite (A) in which a diameter of a circle having an area equal to an average area of a flat surface of the flat graphite is 2.0-20.0 µm, and a conductive filler (B) the average particle diameter of which is at least 1.0 µm but smaller than the diameter of the circle having the area equal to the average area of the flat surface of the flat graphite are contained as the conductive substances,
(2) the percentage by volume of the sum in volume of the flat graphite (A) and the conductive filler (B) in the semiconductive polymeric composite material is 7.0-20.0%,
(3) the volume ratio (A:B) of the flat graphite (A) to the conductive filler (B) is 1:2 to 3:1, and
(4) the volume resistivity of the semiconductive polymeric composite material is 10⁶-10¹² Ωcm.

### DETAILED DESCRIPTION OF THE INVENTION

As an example of the flat graphite (A) useful in the practice of the present invention, may be mentioned flake graphite (crystalline graphite). Those subjected to the conventional treatment such as expansion, grinding or washing are also included in the flake graphite. Among these, flake graphite having an aspect ratio of at least 20 and a fixed carbon content of at least 98.0% is preferred. .

The flat graphite (A) used in the present invention requires that a diameter of a circle having an area equal to an average area of a flat surface of the flat graphite be within a range of 2.0-20.0 µm. In the present invention, the diameter of the circle having the area equal to the average area of the flat surface of the flat graphite is a value obtained by treating a formed or molded product formed from the semiconductive polymeric composite material with a proper solvent to dissolve only a polymeric material therein, and then applying several drops of the solution to a slide glass to observe the dried solution through an optical microscope, whereby the areas of 100 pieces of the flat graphite are separately determined to calculate a diameter of a circle having an area equal to an average area of the 100 pieces of the flat graphite. "The diameter of the circle having the area equal to the average area of the flat surface" will hereinafter be abbreviated merely as "the average diameter of the flat surface". It is not preferable that the average diameter of the flat surface is smaller than 2.0 µm or greater than 20.0 µm because the scatter of the volume resistivity distribution becomes wide. The average diameter of the flat surface is preferably 3.0-15.0 µm, more preferably 5.0-10.0 µm.

The conductive filler (B) useful in the practice of the present invention has an average particle diameter, which is at least 1.0 µm but smaller than the average diameter of the flat surface of the flat graphite (A), and preferably has.a volume resistivity higher than that of the flat graphite (A). The upper limit of the volume resistivity of the conductive filler (B) is preferably lower than that of the resulting semiconductive polymeric composite material.

Examples of the conductive filler (B) include earthy graphite (amorphous graphite), precursors of carbon (ie substances capable of being converted to carbon by a heat treatment under ordinary pressure in an inert atmosphere), metal oxides, ceramics and composite particles obtained by coating a non-conductive inorganic filler such as glass beads with a metal oxide. The precursors of carbon are obtained by subjecting an organic substance having a comparatively high molecular weight to a heat treatment under conditions of ordinary pressure, an inert atmosphere and a temperature lower than 800°C. Incidentally, the organic substance is converted to carbon if it is subjected to a heat treatment at a temperature not lower than 800°C. These fillers may be used either singly or in any combination thereof. Among these, a carbon filler containing fixed carbon in a proportion lower than the flat graphite (A), for example, earthy graphite, may preferably be used. The conductive filler (B) is used in various forms such as particles, fibers and plates.

The average particle diameter of the conductive filler (B) used in the present invention is at least 1.0 µm but smaller than the average diameter of the flat surface of the flat graphite (A). If the average particle diameter of the conductive filler (B) is smaller than 1.0 µm, its contribution to the uniformalization of a conducting path in the resulting formed or molded product becomes small. If the average particle diameter of the conductive filler (B) is greater than the average diameter of the flat surface of the flat graphite (A) on the other hand, a scatter of the volume resistivity distribution in the resulting formed or molded product becomes wide. The average particle diameter of the conductive filler (B) is preferably 1.0-15.0 µm, more preferably 2.0-10.0 µm. The average particle diameter of the conductive filler (B) is determined by treating a formed or molded product formed from the semiconductive polymeric composite material with a prpper solvent to dissolve only a polymeric material therein, and then applying several drops of the solution to a slide glass to observe the dried solution through an optical microscope, whereby the particle diameters of 100 particles of the conductive filler are separately measured to calculate an average value thereof. The term "particle diameter" as used herein means a diameter where the form of the conductive filler is spherical, or a size in the greatest direction where the form is different from the sphere. For example, when the form of the conductive filler is fibrous, the size in its lengthwise direction is regarded as the particle diameter. Besides, when the form of the conductive filler is platy, a diameter of a circle having an area equal to an average area of its flat surface is regarded as the average particle diameter like the average diameter of the flat graphite (A).

The percentage by volume of the sum in volume of the flat graphite (A) and the conductive filler (B) in the semiconductive polymeric composite material is 7.0-20.0%. If this value is lower than 7.0%, it is difficult to attain the volume resistivity within a range of 10⁶-10¹² Ωcm. If the value exceeds 20.0% on the other hand, satisfactory forming or molding ability and mechanical properties cannot be achieved. The percentage by volume is preferably 10.0-16.0%. In order to hold down the charged amount of the conductive substances low and to attain the semiconductivity on the level required, it is preferable to control the percentage by volume of the conductive substances within the above range and to suitably select the kind, particle diameter and the like of the conductive filler in view of the affinity for the polymeric material to be used, and the like.

The volume ratio (A:B) of the flat graphite (A) to the conductive filler (B) is 1:2 to 3:1 (i.e., A/B = 0.5 to 3.0). If the volume ratio is lower than 1:2, the forming or molding ability and mechanical properties of the resulting composite material become unsatisfactory. If the volume ratio is higher than 3:1 on the other hand, it is difficult to control the volume resistivity within a semiconducting region. Even if such control may be feasible, the volume resistivity distribution of the resulting composite material becomes uneven and wide in scatter. The volume ratio is preferably 2:3 to 5:2 (0.7 to 2.5), more preferably 2:3 to 3:2 (0.7 to 1.5).

No particular limitation is imposed on the polymeric material used as a matrix in the semiconductive polymeric composite material according to the present invention, and various thermoplastic resins and elastomers routinely used may be used. Examples of the polymeric material include thermoplastic resins such as polyolefins (for example, polyethylene, polypropylene and ethylene-vinyl acetate copolymers), polyoxymethylene, polycarbonate, styrene resins (for example, polystyrene, styrene-(meth)acrylate copolymers and ABS resins), polyamide, polyester, polyether, fluorocarbon resins (for example, polyvinylidene fluoride, polytetrafluoroethylene, PFA and PEF) and vinyl chloride resins; and elastomers such as silicone rubber, fluororubber, acrylic rubber, polyurethane rubber, chloroprene rubber and epichlorohydrin rubber. These thermoplastic resins and elastomers may be used either singly or in any combination thereof. It has heretofore been difficult to uniformly disperse conductive fillers in a polyvinylidene fluoride resin. According to the present invention, however, this resin may be used to provide a semiconductive polymeric composite material in which the conductive substances are uniformly dispersed.

The volume resistivity (as measured in accordance with JIS K 6911) of the semiconductive polymeric composite material according to the present invention is 10⁶-10¹² Ωcm, preferably 10⁷-10¹⁰ Ωcm. According to the present invention, a semiconductive polymeric composite material having a volume resistivity of 10⁶-10¹² Ωcm can be obtained, and a semiconductive polymeric composite material having a preferable volume resistivity and good mechanical properties can be obtained by suitably selecting the kind of the polymeric material, the kind of the flat graphite and the average diameter of its flat surface, the kind and average particle diameter of the conductive filler, the proportions by volume of these substances, and the like.

In the semiconductive polymeric composite materials according to the present invention, for example, fibers, a stabilizer, a lubricant, a coupling agent, a crosslinking agent (curing agent) and/or the like may be incorporated in addition to the essential components (A) and (B) within limits not impeding the desired objects of the present invention. The semiconductive polymeric composite materials according to the present invention can be obtained in accordance with a solid mixing method in which the respective components are kneaded by means of a Banbury mixer, roll mill, extruder or the like, a method in which a solution with the polymeric material dissolved in a solvent is subjected to solid-liquid mixing with other components, and the mixture is then dried and optionally ground, or the like. The semiconductive polymeric composite materials according to the present invention can be formed or molded into the desired products using various forming or molding methods such as extrusion according to the kind of the polymeric material, the kinds and shapes of the formed or molded products, and the like.

### ADVANTAGES OF THE INVENTION

The semiconductive polymeric composite materials according to the present invention scarcely undergo dusting of the conductive substances in their production process, can attain sufficient semiconductivity even when the charged amount of the conductive substances is relatively small, and is narrow in the scatter of volume resistivity distribution. Therefore, the semiconductive polymeric composite materials according to the present invention have excellent forming or molding ability and mechanical properties. Since the semiconductive polymeric composite materials according to the present invention are narrow in the scatter of volume resistivity distribution, they are suitable for use in charging rolls, developing rolls, transfer rolls, transfer belts, toner layer forming blades, cleaning blades and the like in image-forming apparatus such as electrophotographic copying machines and laser-beam printers. Besides, the semiconductive polymeric composite materials according to the present invention can be used in the form of various molded or formed products having antistatic and destaticizing functions.

### EMBODIMENT OF THE INVENTION

The present invention will hereinafter be described more specifically by the following examples and comparative examples.

### Measuring methods of physical properties:

### (1) Diameter of a circle having an area equal to an average area of a flat surface of flat graphite:

A molded or formed product (for example, a press-molded plate or extruded product) formed from a semiconductive polymeric composite material sample was treated with a proper solvent (for example, dimethylacetamide) to dissolve only a polymeric material (for example, polyvinylidene fluoride) therein. Several drops of the solution were then applied to a slide glass to observe the dried solution through an optical microscope, whereby the areas of 100 pieces of the flat graphite were separately determined to calculate a diameter of a circle having an area equal to an average area of the 100 pieces of the flat graphite.

### (2) Average particle diameter of conductive filler:

A molded or formed product (for example, a press-molded plate or extruded product) formed from a semiconductive polymeric composite material sample was treated with a proper solvent (for example, dimethylacetamide) to dissolve only a polymeric material (for example, polyvinylidene fluoride) therein. Several drops of the solution were then applied to a slide glass to observe the dried solution through an optical microscope, whereby the particle diameters of 100 particles of the conductive filler were separately measured to calculate an average value thereof.

### (3) Volume resistivity:

The volume resistivity was measured in accordance with JIS K 6911. After a molded or formed product (for example, a press-molded plate or extruded product) sample was left over for at least one day in an atmosphere of 23°C and 50% relative humidity, its volume resistivity was measured in the same atmosphere. The size of measuring electrodes (front and back electrodes) is 26 mm in diameter.

More specifically, in the case where the molded or formed product was a press-molded plate, the volume resistivity of each of 5 press-molded product samples each having a size of 110 mm long, 110 mm wide and 0.6 mm thick was measured at 4 separate points thereof using the above measuring electrodes, thereby determining an average value of volume resistivities at 20 points in total.

In the case where the molded or formed product was an extruded product (sheet), the volume resistivity of a sheet sample 250 mm wide, 10 mm long and 150 µm thick was measured at 80 separate points thereof to determine an average value thereof.

### (4) Scatter of volume resistivity:

A ratio of the maximum value to the minimum value among the measured values (namely, 20 points for the press-molded plates or 80 points for the extruded sheet) in the item (3) was determined. The results are expressed by logarithmic values.

### (5) Volume resistivities of flat graphite and conductive filler:

A flat graphite sample or a conductive filler sample was charged into a cylindrical container made of polypropylene and having an internal diameter of 15 mm to control the charged amount of the sample so as to give a sample height of 50 ± 5 mm when compressed under a pressure of 5 kgf. Thereafter, voltage and electric currents at both ends of the compressed sample were measured to calculate a volume resistivity. A difference in the magnitude of volume resistivity between the flat graphite and the conductive filler was determined by comparison between these measured values.

### [Example 1]

### Raw materials:

(i) Flat graphite:
   Flake graphite (SP-20, trade name, product of Nippon Graphite Industry Co., Ltd.)
   Average diameter of flat surface: 6.0 µm
   Fixed carbon content: 99.0%
   Volume resistivity: 0.38 Ωcm
(ii) Conductive filler:
   Earthy graphite (HOP, trade name, product of Nippon Graphite Industry Co., Ltd.)
   Average particle diameter: 2.5 µm
   Fixed carbon content: 98.6%
   Volume resistivity: 2.7 Ωcm
(iii) Polymeric material:
   Polyvinylidene fluoride (KF1000, trade name, product of Kureha Chemical Industry Co., Ltd.)

### Production of press-molded plate:

A beaker having a volume of 200 ml was charged with 3 g of the flake graphite, 3 g of the earthy graphite and 80 ml of dimethylacetamide, and the contents were heated to 130°C on an oil bath with stirring. While stirring the contents, 30 g of the polyvinylidene fluoride were charged into the beaker little by little. After stirring the mixture at 130°C for 30 minutes by means of a propeller blade (4 blades, agitating up, blade length: 25 mm, blade width: 20 mm), the mixture was cooled slowly for 30 minutes with stirring. The viscous solution thus obtained was extruded through a syringe (nozzle diameter: 2 mm) into water to form a strand. After this strand was immersed for 48 hours in water to replace dimethylacetamide remaining in the strand with water, the strand was taken out of water to form pellets by a pelletizer. The pellets were dried for 24 hours at 95°C and further for 80 hours at 120°C. The dried pellets were press-molded at 270°C under an initial pressure of 3 MPa to form a plate 0.6 mm thick.

The percentages by volume of the flake graphite and earthy graphite in the thus-obtained press-molded plate were each 6.9%, while the percentage by volume of the polyvinylidene fluoride was 86.2%. The press-molded plate was dissolved in dimethylacetamide under heat, thereby measuring the average diameters of the flake graphite and earthy graphite. As a result, the average diameter of the flat surface of the flake graphite was found to be 6.0 µm, while the average particle diameter of the earthy graphite was found to be 2.5 µm. Both graphites substantially retained the respective shapes before the molding. This is considered to be attributable to the fact that the earthy graphite was not ground by the shearing force of the pelletizer, and the flat surface of the flake graphite was also not broken though its layer structure might be cleaved. Incidentally, dusting in the production process occurred only to a lesser extent compared with the case making use of carbon black. The results are shown in Table 1.

### [Examples 2-5]

### Production of press-molded plates:

Press-molded plates were produced in the same manner as in Example 1 except that the proportions of the flake graphite and earthy graphite to be incorporated were changed as shown in Table 1. The results are shown in Table 1. Incidentally, in each example, dusting in the production process occurred only to a lesser extent compared with the case making use of carbon black.

### [Example 6]

### Production of extruded sheet:

After the respective components of the same composition as in Example 1 were thoroughly stirred and mixed by a mixer, the mixture was extruded by a single screw extruder into pellets. The pellets thus obtained were then melt-extruded through a T-die in the form of a sheet in accordance with a melt extrusion process, thereby producing a sheet. The results are shown in Table 1. Incidentally, dusting in the production process occurred only to a lesser extent compared with the case making use of carbon black.

### [Comparative Examples 1-3]

### Production of press-molded plates:

Press-molded plates were produced in the same manner as in Example 1 except that the proportions of the flake graphite and earthy graphite to be incorporated were changed as shown in Table 1. The results are shown in Table 1. Incidentally, in each comparative example, dusting in the production process occurred only to a lesser extent compared with the case making use of carbon black.

### [Comparative Example 4]

### Raw materials:

(i) Flat graphite:
   Flake graphite (HAG150, trade name, product of Nippon Graphite Industry Co., Ltd.)
   Average diameter of flat surface: 0.7 µm
   Fixed carbon content: 99.0%
   Volume resistivity: 0.95 Ωcm
(ii) Conductive filler:
   Earthy graphite (HOP, trade name, product of Nippon Graphite Industry Co., Ltd.)
   Average particle diameter: 2.5 µm
   Fixed carbon content: 98.6%
   Volume resistivity: 2.7 Ωcm
(iii) Polymeric material:
   Polyvinylidene fluoride (KF1000, trade name, product of Kureha Chemical Industry Co., Ltd.)

### Production of press-molded plate:

A press-molded plate was produced in the same manner as in Example 1 except that the above flake graphite the average diameter of the flat surface of which was 0.7 µm was used as the flat graphite, and the proportions of the flake graphite and earthy graphite to be incorporated were changed as shown in Table 1. The results are shown in Table 1. Incidentally, dusting in the production process occurred only to a lesser extent compared with the case making use of carbon black.

### [Comparative Example 5]

### Raw materials:

(i) Flat graphite:
   Flake graphite (HAG150, trade name, product of Nippon Graphite Industry Co., Ltd.)
   Average diameter of flat surface: 0.7 µm
   Fixed carbon content: 99.0%
   Volume resistivity: 0.95 Ωcm
(ii) Conductive filler:
   Potassium titanate whisker (Dentol BK300, trade name, product of Otsuka Chemical Co., Ltd.)
   Average fiber length: 15.0 µm
   Average fiber diameter: 0.5 µm
   Volume resistivity: 2.1 Ωcm
(iii) Polymeric material:
   Polyvinylidene fluoride (KF1000, trade name, product of Kureha Chemical Industry Co., Ltd.)

### Production of press-molded plate:

A press-molded plate was produced in the same manner as in Example 1 except that the above flake graphite the average diameter of the flat surface of which was 0.7 µm was used as the flat graphite, the above potassium titanate whisker having an average particle diameter (fiber length) of 15.0 µm was used as the conductive filler, and the proportions of these components to be incorporated were changed as shown in Table 1. The results are shown in Table 1.

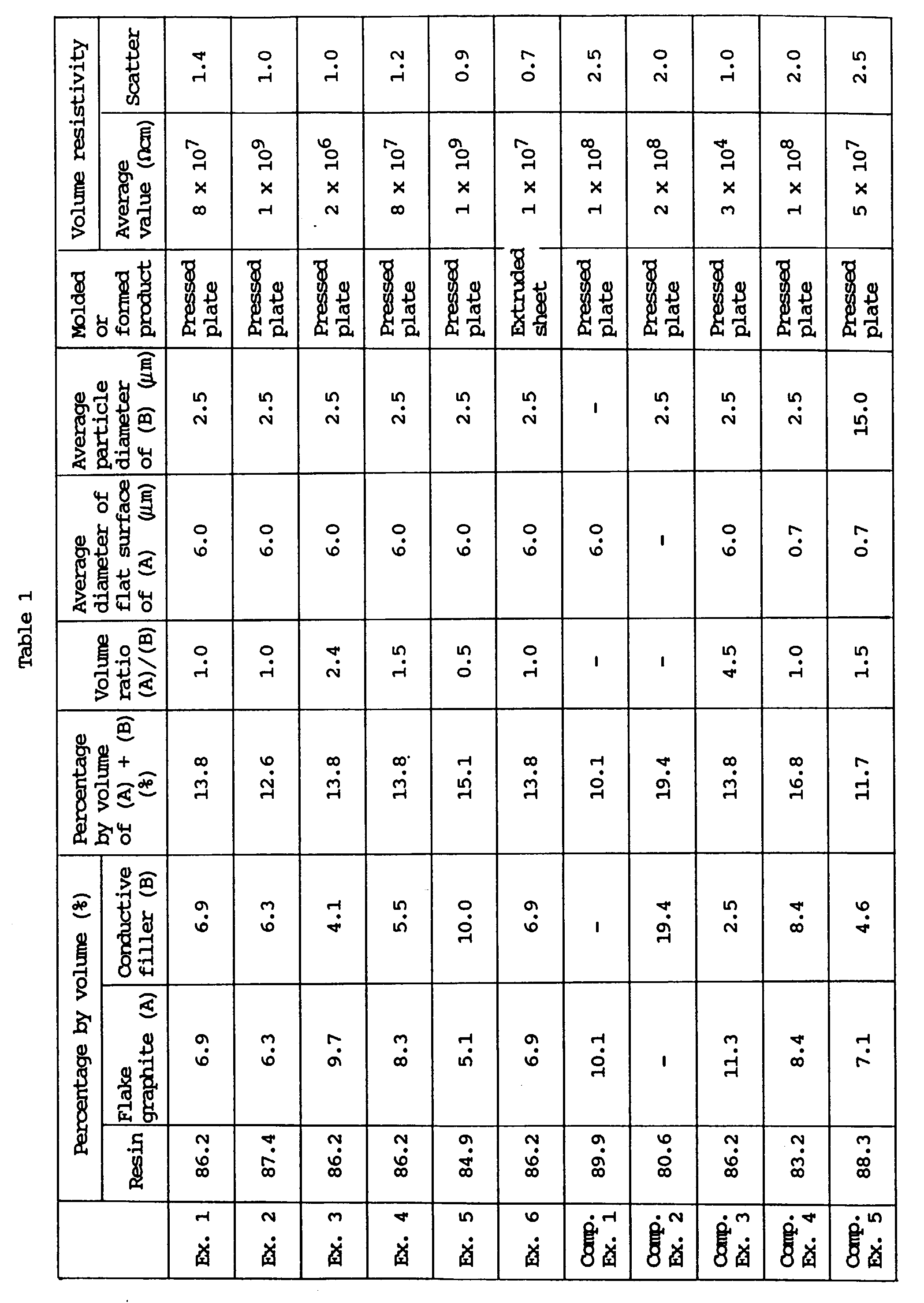

## Claims

1. A conductive polymeric composite material comprising a matrix composed of a polymeric material, and conductive substances dispersed therein, wherein
(1) flat graphite (A) in which a diameter of a circle having an area equal to an average area of a flat surface of the flat graphite is in the range 2.0-20.0 µm, and a conductive filler (B) the average particle diameter of which is at least 1.0 µm but smaller than the diameter of the circle having the area equal to the average area of the flat surface of the flat graphite are contained as the conductive substances,
(2) the percentage by volume of the sum in volume of the flat graphite (A) and the conductive filler (B) in the semiconductive polymeric composite material is in the range 7.0-20.0%,
(3) the volume ratio (A:B) of the flat graphite (A) to the conductive filler (B) is in the range 1:2 to 3:1, and
(4) the volume resistivity of the semiconductive polymeric composite material is in the range 10⁶-10¹² Ωcm.

2. The composite material according to Claim 1, wherein the diameter of the circle having the area equal to the average area of the flat surface of the flat graphite (A) is in the range 3.0-15.0 µm, preferably in the range 5.0-10.0 µm.

3. The composite material according to Claim 1 or Claim 2, wherein the average diameter of the conductive filler (B) is in the range 1.0-15.0 µm, preferably in the range 2.0-10.0 µm.

4. The composite material according to any preceding claim, wherein the percentage by volume of the sum in volume of the flat graphite (A) and the conductive filler (B) in the semiconductive polymeric composite material is in the range 10.0-16.0%.

5. The composite material according to any preceding claim 1, wherein the volume ratio (A:B) of the flat graphite (A) to the conductive filler (B) is in the range 2:3 to 5:2, preferably in the range 2:3 to 3:2.

6. The composite material according to any preceding claim, wherein the flat graphite (A) is flake graphite, preferably having a fixed carbon content in of at least 98.0%.

7. The composite material according to any preceding claim, wherein the volume resistivity of the conductive filler (B) is higher than that of the flat graphite (A).

8. The composite material according to any preceding claim, wherein the conductive filler (B) is at least one selected from the group consisting of earthy graphite, precursors of carbon, ceramics, metal oxides and composite particles obtained by coating a non-conductive filler with a metal oxide.
polyester, polyether, fluorocarbon resins, vinyl chloride resins, silicone rubber, fluororubber, acrylic rubber, polyurethane rubber, chloroprene rubber and epichlorohydrin rubber, and is preferably polyvinylidene fluoride.
